# FASCICULE DE BREVET EUROPEEN

(11) **EP 3 176 018 B1**
(45) Date de publication et mention de la délivrance du brevet: **12.09.2018**
(21) Numéro de dépôt: 16197363.1
(22) Date de dépôt: 04.11.2016
(51) Int. Cl.: B60K 1/02, B60K 6/52, B60K 17/16, B60K 17/356

(54) **GROUPE MOTOPROPULSEUR D'UN VEHICULE**
MOTORANTRIEBSANLAGE EINES FAHRZEUGS
POWER PLANT OF A VEHICLE

(30) Priorité: 04.12.2015 FR 1561840
(43) Date de publication de la demande: 07.06.2017
(73) Titulaire: PSA Automobiles SA, 78300 Poissy (FR)
(72) Inventeur: DELAND HUY, Eric, 91100 Corbeil Essonnes (FR); BRULHARD, Valerie, 78140 Velizy (FR)

(56) Documents cités:
- EP-A1- 0 919 425
- EP-A1- 2 514 620
- US-A1- 2015 240 917
- US-B2- 7 690 451

## Description

L'invention concerne un groupe motopropulseur d'un véhicule, notamment automobile.

L'invention s'applique à un véhicule hybride comprenant d'une part un moteur thermique de propulsion et d'autre part deux moteurs électriques de propulsion et un système motoréducteur.

Il est bien connu qu'un tel véhicule comprend en façade plusieurs accessoires, tels qu'un alternateur, un compresseur de climatisation ou une pompe centrifuge. Il est d'autre part connu de relier ces accessoires au moteur thermique du véhicule automobile, qui entraîne alors ces accessoires à l'aide d'une courroie reliée par une poulie au vilebrequin dudit moteur thermique.

Cependant, l'entraînement de ces accessoires a pour conséquence d'une part l'augmentation de la charge du moteur thermique et donc de sa consommation, et d'autre part la diminution du rendement dudit moteur thermique. En outre, l'augmentation de la charge du moteur thermique induit également une augmentation de la production et du rejet de dioxyde de carbone par ce dernier. Enfin, sur un véhicule hybride, lors d'une phase de fonctionnement exclusivement électrique au cours de laquelle le moteur thermique est à l'arrêt, certains accessoires, comme le compresseur de climatisation, sont alimentés par la batterie du véhicule, provoquant une décharge très rapide de cette dernière, qui devra par la suite être rechargée par le moteur thermique.

Il est également connu notamment du document US 7690451 un véhicule hybride présentant un groupe de propulsion hybride comportant un moteur thermique et un moteur électrique, ainsi qu'un système pour alimenter les accessoires du véhicule. En particulier, ce système comporte un moteur électrique d'entraînement des accessoires montés sur une façade.

Cependant, ce système de propulsion hybride a pour inconvénient d'être encombrant du fait de la présence de la façade accessoires, et que l'entraînement des accessoires ne peut être réalisé que par un moteur électrique supplémentaire. Un autre système connu est celui du document EP2514620 A1.

La présente invention a pour but de pallier les inconvénients ci-dessus de l'art antérieur.

Pour atteindre ce but, le groupe motopropulseur selon l'invention comprend des premier et second moteurs électriques, un système motoréducteur comportant un arbre de sortie, les arbres moteurs des premier et second moteurs électriques étant mécaniquement reliés à l'arbre de sortie du système motoréducteur via respectivement deux dispositifs d'accouplement, et comprenant en outre des premier et second accessoires entraînés par le premier moteur électrique et un troisième accessoire entrainé par le second moteur électrique, selon le véhicule revendiqué dans la revendication 1.

Selon une autre particularité, les premier et deuxième accessoires sont reliés en série l'un à l'autre par l'intermédiaire d'un dispositif de transmission mécanique permettant des vitesses de rotation différentes des deux arbres des premier et deuxième accessoires.

Selon une autre particularité, le dispositif de transmission mécanique est un train épicycloïdal.

Selon une autre particularité, l'arbre du second accessoire est mécaniquement relié au système de transmission mécanique via un dispositif d'accouplement.

Selon une autre particularité, d'une part l'arbre du premier accessoire est entrainé par l'arbre moteur du premier moteur électrique, et d'autre part l'arbre du troisième accessoire est entrainé par l'arbre moteur du deuxième moteur électrique, via respectivement deux courroies ou chaines de transmission logées avec les moteurs électriques et les accessoires dans le carter du système motoréducteur.

Selon une autre particularité, les premier et second accessoires sont reliés en parallèle à l'arbre moteur du premier moteur électrique.

Selon une autre particularité, d'une part les arbres des premier et second accessoires sont entraînés par l'arbre moteur du premier moteur électrique, et d'autre part l'arbre du troisième accessoire est entrainé par l'arbre moteur du deuxième moteur électrique via respectivement trois courroies ou chaines de transmission disposées à l'extérieur du carter du système motoréducteur.

Selon une autre particularité, les premier, second et troisième accessoires sont indifféremment un alternateur, un compresseur de climatisation et une pompe centrifuge.

L'invention concerne un véhicule automobile, de type hybride, comprenant un groupe motopropulseur tel que défini précédemment.

Selon l'invention le véhicule comprend un train de roues avant, un train de roues arrière, un moteur thermique à l'avant du véhicule pour entraîner le train de roues avant, les moteurs électriques et le système motoréducteur étant à l'arrière du véhicule pour entraîner le train de roues arrière.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 représente une vue schématique de dessus d'un véhicule hybride comprenant un groupe motopropulseur selon l'invention ;
- La figure 2 représente une vue schématique d'un premier mode de réalisation selon l'invention d'un groupe de propulsion électrique comportant un système motoréducteur et trois accessoires logés dans le carter du système motoréducteur ;
- La figure 3 représente une vue schématique d'un second mode de réalisation selon l'invention d'un groupe de propulsion électrique comportant un système motoréducteur et trois accessoires logés à l'extérieur du carter du système motoréducteur .

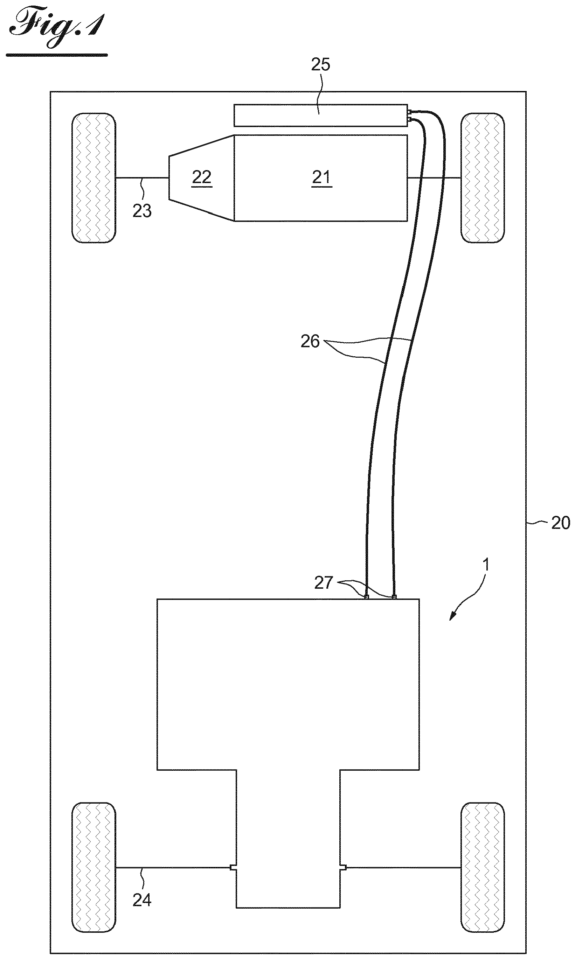

On décrit ci-après l'invention en se référant aux figures 1 à 3, appliquée à un véhicule automobile, notamment de type hybride.

Le véhicule automobile 20 de type hybride représenté à la figure 1 comprend à l'avant un moteur thermique de propulsion 21, relié à une boite de vitesses 22 et destiné à entraîner le train de roues avant 23 du véhicule 20. On définit les termes avant et arrière du véhicule 20 par rapport au sens de déplacement du véhicule adoptant sa vitesse de croisière.

Le véhicule 20 comprend à l'arrière un groupe de propulsion électrique 1, destiné à entraîner le train de roues arrière 24 du véhicule 20.

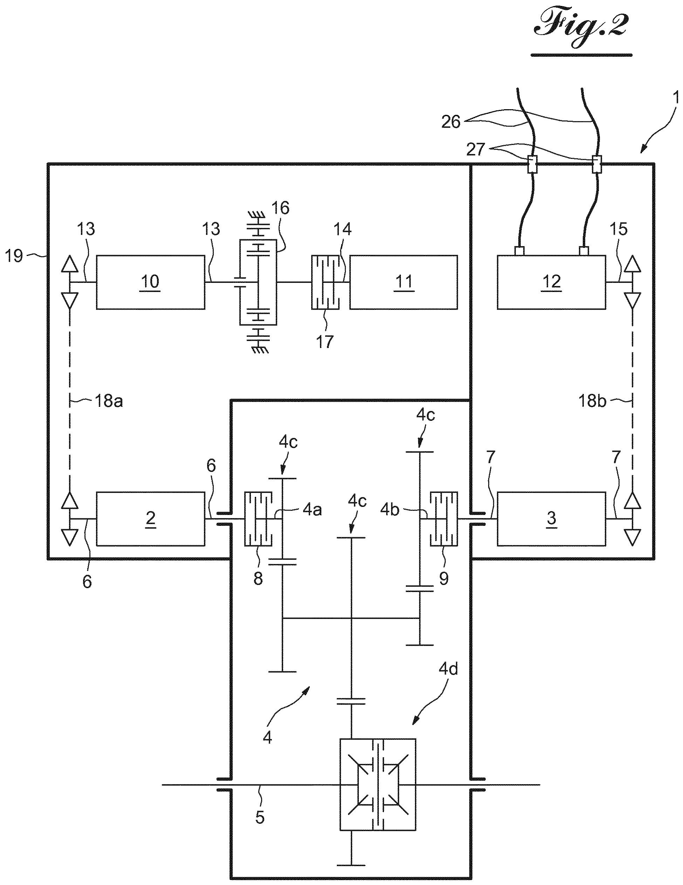

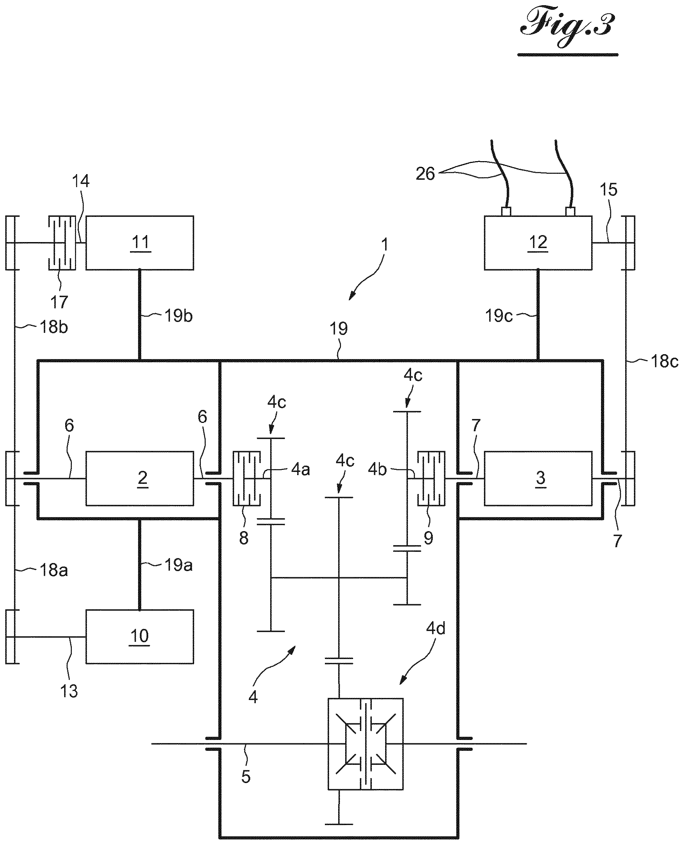

Le groupe de propulsion électrique 1 représenté également aux figures 2 et 3 comprend deux moteurs électriques 2, 3, ci-après nommés premier et second moteurs électriques 2, 3. Le groupe de propulsion électrique 1 comprend également un système motoréducteur 4 comportant deux arbres d'entrée 4a, 4b, un ensemble d'engrenages 4c assurant la fonction réductrice du système motoréducteur 4 et un différentiel 4d comprenant un arbre de sortie 5 destiné à entraîner le train de roues arrière 24. L'ensemble d'engrenages est destiné à être entraîné par au moins un des arbres d'entrée de l'ensemble d'engrenages, ce dernier étant apte à entraîner l'arbre de sortie 5 du système motoréducteur 4. Les moteurs électriques 2, 3 sont logés dans le carter 19 du système motoréducteur 4.

Le véhicule 20 comprend également un radiateur 25 pour permettre de refroidir le liquide de refroidissement, qui est destiné à refroidir d'une part le moteur thermique 21 et d'autre part le système motoréducteur 4.

Les arbres moteurs 6, 7 des premier et second moteurs électriques 2, 3 sont mécaniquement reliés respectivement aux deux arbres d'entrée 4a, 4b du système motoréducteur 4 via respectivement deux dispositifs d'accouplement 8, 9 compris dans le carter 19 du système motoréducteur 4, de sorte que la rotation d'au moins un des arbres moteurs 6, 7 des premier et second moteurs électriques 2, 3 entraîne en rotation l'arbre de sortie 5 du système motoréducteur 4.

Chaque dispositif d'accouplement 8, 9, par exemple et de manière non limitative un dispositif d'embrayage ou un dispositif de crabotage, permet d'accoupler ou de désaccoupler n'importe quel des deux moteurs électriques 2, 3 du système motoréducteur 4, en fonction des besoins de propulsion. Les différentes phases de fonctionnement du groupe de propulsion électrique 1 seront décrites plus loin.

Selon l'invention, le groupe de propulsion électrique 1 comprend en outre trois accessoires, ci-après nommés premier, second et troisième accessoires 10, 11, 12.

Les premier et second accessoires 10, 11 sont entrainés par l'arbre moteur 6 du premier moteur électrique 2, tandis que le troisième accessoire 12 est entrainé par l'arbre moteur 7 du deuxième moteur électrique 3. Les trois accessoires 10, 11, 12 sont par exemple et indifféremment un alternateur, un compresseur de climatisation et une pompe centrifuge. La pompe centrifuge ainsi entrainée par un des moteurs électriques 2, 3 a pour fonction d'assurer le refroidissement du groupe de propulsion électrique 1.

En référence à la figure 2, un premier mode de réalisation de l'invention va maintenant être décrit. Selon ce mode de réalisation, les accessoires 10, 11, 12 sont intégrés dans le carter 19 du système motoréducteur 4.

Les premier et second accessoires 10, 11 sont montés en série de telle sorte que l'arbre 14 du second accessoire 11 est mécaniquement relié à une extrémité de l'arbre 13 du premier accessoire 10 via un système de transmission mécanique 16 et un dispositif d'accouplement 17 logés dans le carter 19 du système motoréducteur 4.

L'autre extrémité de l'arbre 13 du premier accessoire 10 est quant à elle reliée mécaniquement à l'arbre moteur 6 du premier moteur électrique 2 via une courroie ou une chaine de transmission 18a logée avec le premier moteur électrique 2 dans le carter 19 du système motoréducteur 4. Ainsi, l'arbre 13 du premier accessoire 10, qui est apte à être entraîné par l'arbre moteur 6 du premier moteur 2, est apte à entraîner l'arbre 14 du second accessoire 11.

De préférence, le premier accessoire 10 est un alternateur et le deuxième accessoire 11 est un compresseur de climatisation, et c'est cette configuration qui sera décrite ci-dessous.

Le dispositif d'accouplement 17, par exemple un dispositif d'embrayage ou de crabotage, reliant les arbres 13, 14 des premier et second accessoires 10, 11, permet au besoin de désaccoupler le second accessoire 11 du premier moteur électrique 2. Le système de transmission 16, par exemple un train épicycloïdal, reliant les arbres 13, 14 des premiers et seconds accessoires 10, 11 autorise le montage dans le groupe de propulsion électrique 1 de deux accessoires 10, 11 dont les arbres 13, 14 n'ont pas forcément la même vitesse de rotation. Ce train épicycloïdal 16, dont le bâti est solidaire du carter 19 du système motoréducteur 4, comprend une couronne solidaire du bâti, un engrenage dit planétaire et une pluralité d'engrenages dits satellites montés sur un porte-satellites. Le porte-satellites et le planétaire sont respectivement solidaires de deux arbres coaxiaux, un des arbres coaxiaux étant relié à l'arbre 13, 14 d'un des accessoires 10, 11 et l'autre des arbres coaxiaux étant relié à l'arbre 13, 14 de l'autre accessoire 10, 11.

L'arbre 15 du troisième accessoire 12 est quant à lui relié mécaniquement à l'arbre moteur 7 du deuxième moteur électrique 3 via une courroie ou une chaine de transmission 18b logée avec le deuxième moteur électrique 3 dans le carter 19 du système motoréducteur 4. Ce troisième accessoire 12 est de préférence une pompe centrifuge, reliée via des tuyaux 26 au radiateur 25 du véhicule 20. Ainsi, les tuyaux 26 sont raccordés notamment à la pompe centrifuge à des embouts 27 solidaires du carter 19 du système motoréducteur 4 pour amener une entrée et une sortie de liquide de refroidissement.

De manière optionnelle, l'arbre 15 du troisième accessoire comprend un dispositif d'accouplement, par exemple un dispositif d'embrayage ou de crabotage, pour permettre au besoin de désaccoupler le troisième accessoire 12 du deuxième moteur électrique 3.

En référence à la figure 3, un deuxième mode de réalisation de l'invention va maintenant être décrit. Selon ce mode de réalisation, les accessoires 10, 11, 12 sont logés à l'extérieur du carter 19 du système motoréducteur 4.

Les premier et second accessoires 10, 11 sont fixés sur le système motoréducteur 4, à l'extérieur du carter 19, par tout moyen de fixation 19a, 19b connu en soi, par exemple et de manière non limitative des colonnettes à sertir. L'arbre moteur 6 du premier moteur électrique 2 entraîne les arbres de ces premier et second accessoires 10, 11 indépendamment l'un de l'autre, via respectivement deux courroies ou chaines de transmission 18a, 18b situées à l'extérieur du carter 19 du système motoréducteur 4.

Un dispositif d'accouplement 17, par exemple un dispositif d'embrayage ou de crabotage, est monté sur l'arbre 14 du second accessoire 11, pour permettre au besoin de désaccoupler le second accessoire 11 du premier moteur électrique 2. De préférence, le premier accessoire 10 est un alternateur et le deuxième accessoire 11 est un compresseur de climatisation.

Le troisième accessoire 12 est également fixé sur le système motoréducteur 4, à l'extérieur du carter 19, par tout moyen de fixation 19c connu en soi, par exemple et de manière non limitative des colonnettes à sertir. L'arbre moteur 7 du second moteur électrique 3 entraîne l'arbre 15 de ce troisième accessoire 12 via une courroie ou chaine de transmission 18c située à l'extérieur du carter 19 du système motoréducteur 4.

Les différentes phases de fonctionnement du groupe de propulsion électrique 1 sont communes aux deux modes de réalisation décrits ci-dessus et vont maintenant être décrites.

On peut distinguer trois phases de fonctionnement différentes : une phase thermique pure, une phase électrique ou hybride à faible vitesse, et une phase électrique ou hybride à vitesse rapide.

Au cours de la phase de fonctionnement dite thermique pure, le moteur thermique 21 assure seul la propulsion du véhicule 20. Les deux dispositifs d'accouplement 8, 9 sont donc dans une configuration telle que les arbres moteurs 6, 7 des deux moteurs électriques 2, 3 sont désaccouplés du système motoréducteur 4. Les premier et second moteurs électriques 2, 3 demeurent alimentés par une batterie du véhicule 20 pour assurer la rotation de leurs arbres moteurs respectifs 6, 7, et donc l'entraînement au moins des arbres 13, 15 des premier 10 et troisième 12 accessoires.

De manière alternative, pour permettre l'entraînement continu au moins des arbres 13, 15 des premier et troisième accessoires 10, 12 respectivement par les arbres moteurs 6, 7 des premier et second moteurs électriques 2, 3, les dispositifs d'accouplement 8, 9 maintiennent l'accouplement des arbres moteurs des moteurs électriques avec le système motoréducteur 4, de sorte que l'arbre de sortie 5 du système motoréducteur 4, entraîné en rotation par le train de roues arrière 24, entraîne en rotation les arbres moteurs des premier et second moteurs électriques.

Au cours de la phase de fonctionnement dite électrique ou hybride à faible vitesse, le groupe de propulsion électrique 1 assure au moins une partie de la propulsion du véhicule 20 par entraînement du train de roues arrière 24. La propulsion peut être purement électrique, auquel cas le moteur thermique 21 est arrêté, ou hybride, auquel cas le moteur thermique 21 participe également à la propulsion du véhicule en entraînant le train de roues avant 23.

L'arbre moteur 6, 7 d'un des deux moteurs électriques 2, 3 est accouplé au système motoréducteur 4 via le dispositif d'accouplement correspondant 8, 9, de sorte que ce moteur électrique accouplé et alimenté par la batterie entraîne en rotation l'arbre de sortie 5 du système motoréducteur 4.

L'autre moteur électrique est quant à lui désaccouplé du système motoréducteur 4, de sorte que ce moteur ne participe pas à l'entraînement de l'arbre de sortie 5 du système motoréducteur 4. Ce moteur électrique est néanmoins alimenté par la batterie, de sorte que son arbre moteur entraîne en rotation l'arbre 15 du troisième accessoire 12 s'il s'agit du second moteur électrique 3, ou bien l'arbre 13 du premier accessoire 10 s'il s'agit du premier moteur électrique 2 qui est désaccouplé du système motoréducteur 4, et le cas échéant l'arbre 14 du deuxième accessoire 11 si ce dernier est accouplé au premier accessoire 10 via le dispositif d'accouplement 16 correspondant.

La rotation de l'arbre moteur du moteur électrique désaccouplé est pilotée, par exemple par un calculateur du véhicule 20, en fréquence de rotation au juste nécessaire, c'est-à-dire que la vitesse de rotation atteinte par l'arbre moteur du moteur électrique désaccouplé du système motoréducteur 4 est juste suffisante pour permettre l'alimentation en énergie du troisième accessoire 12 s'il s'agit du second moteur électrique 3 qui est désaccouplé du système motoréducteur 4, ou au moins du premier accessoire 10 s'il s'agit du premier moteur électrique 2 qui est désaccouplé du système motoréducteur 4.

Au cours de la phase de fonctionnement dite électrique ou hybride à vitesse rapide, le groupe de propulsion électrique 1 assure au moins une partie de la propulsion du véhicule 20 par entraînement du train de roues arrière 24. La propulsion peut être purement électrique, auquel cas le moteur thermique 21 est arrêté, ou hybride, auquel cas le moteur thermique 21 participe également à la propulsion du véhicule en entraînant le train de roues avant 23.

Cependant, dans cette phase de fonctionnement, un plus grand couple doit être fourni au moins par le groupe de propulsion électrique 1 pour maintenir la vitesse de croisière du véhicule 20.

Pour ce faire, les deux moteurs électriques 2, 3 sont accouplés au système motoréducteur 4, et participent tous les deux à l'entraînement de l'arbre de sortie 5 du système motoréducteur 4. Dans cette phase de fonctionnement, les vitesses de rotation au moins des arbres 13, 15 des premier et troisième accessoires 10, 12 sont donc tributaires de la vitesse de rotation du train de roues arrière 24 du véhicule 20.

Ainsi, le groupe de propulsion électrique 1 selon l'invention, intégrant sur ou dans le carter 19 du système motoréducteur 4 les accessoires 10, 11, 12 comme l'alternateur, le compresseur de climatisation et la pompe centrifuge, permet de supprimer la façade accessoires utilisée dans les systèmes connus. Ceci permet de réduire la charge du moteur thermique 21, qui n'a plus besoin d'alimenter les accessoires 10, 11, 12, et en outre d'améliorer le rendement de celui-ci.

L'intégration d'un système de transmission mécanique 16 entre les premier et second accessoires 10, 11 reliés en série, ou le montage des accessoires en parallèle sur les arbres moteurs 6, 7 des moteurs électriques 2, 3 permet également au constructeur de choisir des accessoires fonctionnant à des fréquences de rotation différentes. Enfin, il est possible au constructeur de dimensionner librement les accessoires, un accessoire particulier n'étant pas obligatoirement associé à un moteur électrique déterminé, les premier, second et troisième accessoires 10, 11, 12 pouvant être choisis parmi n'importe quel type d'accessoire automobile habituellement intégré en façade.

## Revendications

1. Véhicule automobile (20) hybride comprenant un groupe motopropulseur, ledit groupe motopropulseur comprenant des premier (2) et second (3) moteurs électriques, un système motoréducteur (4) comportant un arbre de sortie (5), les arbres moteurs (6, 7) des premier (2) et second (3) moteurs électriques étant mécaniquement reliés à l'arbre de sortie (5) du système motoréducteur via respectivement deux dispositifs d'accouplement (8, 9), et comprenant en outre des premier (10) et second (11) accessoires entraînés par le premier moteur électrique (2) et un troisième accessoire (12) entrainé par le second moteur électrique (3), **caractérisé en ce qu'**il comprend un train de roues avant (23), un train de roues arrière (24), un moteur thermique (22) à l'avant du véhicule pour entraîner le train de roues avant (23), les moteurs électriques (2, 3) et le système motoréducteur (4) étant à l'arrière du véhicule (20) pour entraîner le train de roues arrière (24).

2. Véhicule automobile (20) selon la revendication 1, **caractérisé en ce que** les premier (10) et deuxième (11) accessoires sont reliés en série l'un à l'autre par l'intermédiaire d'un dispositif de transmission mécanique (16) permettant des vitesses de rotation différentes des deux arbres (13, 14) des premier (10) et deuxième (11) accessoires.

3. Véhicule automobile (20) selon la revendication 2, **caractérisé en ce que** le dispositif de transmission mécanique (16) est un train épicycloïdal.

4. Véhicule automobile (20) selon la revendication 2 ou 3, **caractérisé en ce que** l'arbre (14) du second accessoire (11) est mécaniquement relié au système de transmission mécanique (16) via un dispositif d'accouplement (17).

5. Véhicule automobile (20) selon l'une quelconque des revendications 1 à 4, **caractérisé en ce que** d'une part l'arbre (13) du premier accessoire (10) est entrainé par l'arbre moteur (6) du premier moteur électrique (2), et d'autre part l'arbre (15) du troisième accessoire (12) est entrainé par l'arbre moteur (7) du deuxième moteur électrique (3), via respectivement deux courroies ou chaines de transmission (18a, 18b) logées avec les moteurs électriques (2, 3) et les accessoires (10, 11, 12) dans le carter (19) du système motoréducteur (4).

6. Véhicule automobile (20) selon la revendication 1, **caractérisé en ce que** les premier (10) et second (11) accessoires sont reliés en parallèle à l'arbre moteur (6) du premier moteur électrique (2).

7. Véhicule automobile (20) selon la revendication 6, **caractérisé en ce que** d'une part les arbres (13, 14) des premier (10) et second (11) accessoires sont entraînés par l'arbre moteur (6) du premier moteur électrique (2), et d'autre part l'arbre (15) du troisième accessoire (12) est entrainé par l'arbre moteur (7) du deuxième moteur électrique (3) via respectivement trois courroies ou chaines de transmission (18a, 18b, 18c) disposées à l'extérieur du carter (19) du système motoréducteur (4).

8. Véhicule automobile (20) selon l'une quelconque des revendications 1 à 7, **caractérisé en ce que** les premier (10), second (11) et troisième (12) accessoires sont indifféremment un alternateur, un compresseur de climatisation et une pompe centrifuge.

## Patentansprüche

1. Hybridkraftfahrzeug (20), das eine Motorantriebsanlage umfasst, wobei die Motorantriebsanlage einen ersten (2) und einen zweiten (3) Elektromotor, ein Untersetzungssystem (4), das eine Ausgangswelle (5) umfasst, umfasst, wobei die Antriebswellen (6, 7 des ersten (2) und zweiten (3) Elektromotors mit der Ausgangswelle (5) des Untersetzungssystems jeweils über zwei Kupplungsvorrichtungen (8, 9) mechanisch verbunden sind und außerdem ein erstes (10) und zweites (11) Zubehörteil umfasst, die von dem ersten Elektromotor (2) angetrieben werden, und ein drittes Zubehörteil (12), das von dem zweiten Elektromotor (3) angetrieben wird, **dadurch gekennzeichnet, dass** es eine Vorderradachse (23), eine Hinterradachse (24), einen Verbrennungsmotor (22) an der Vorderseite des Fahrzeugs zum Antreiben der Vorderradachse (23) umfasst, wobei die Elektromotoren (2, 3) und das Untersetzungssystem (4) an der Rückseite des Fahrzeugs (20) liegen, um die Hinterradachse (24) anzutreiben.

2. Kraftfahrzeug (20) nach Anspruch 1, **dadurch gekennzeichnet, dass** das erste (10) und das zweite (11) Zubehörteil in Serie miteinander über eine mechanische Kraftübertragungsvorrichtung (16), die unterschiedliche Drehzahlen der zwei Wellen (13, 14) des ersten (10) und zweiten (11) Zubehörteils erlaubt, verbunden sind.

3. Kraftfahrzeug (20) nach Anspruch 2, **dadurch gekennzeichnet, dass** die mechanische Kraftübertragungsvorrichtung (16) ein epizyklisches Zahnradgetriebe ist.

4. Kraftfahrzeug (20) nach Anspruch 2 oder 3, **dadurch gekennzeichnet, dass** die Welle (14) des zweiten Zubehörteils (11) mit dem Kraftübertragungssystem (16) über eine Kupplungsvorrichtung (17) mechanisch verbunden ist.

5. Kraftfahrzeug (20) nach einem der Ansprüche 1 bis 4, **dadurch gekennzeichnet, dass** einerseits die Welle (13) des ersten Zubehörteils (10) von der Antriebswelle (6) des ersten Elektromotors (2), und andererseits die Welle (15) des dritten Zubehörteils (12) von der Antriebswelle (7) des zweiten Elektromotors (3) jeweils über zwei Riemen oder Kraftübertragungsketten (18a, 18b) die mit den Elektromotoren (2, 3) und den Zubehörteilen (10, 11, 12) in dem Gehäuse (19) des Untersetzungssystems (4) untergebracht sind, angetrieben werden.

6. Kraftfahrzeug (20) nach Anspruch 1, **dadurch gekennzeichnet, dass** das erste (10) und das zweite (11) Zubehörteil mit der Antriebswelle (6) des ersten Elektromotors (2) parallel verbunden sind.

7. Kraftfahrzeug (20) nach Anspruch 6, **dadurch gekennzeichnet, dass** einerseits die Wellen (13, 14) des ersten (10) und zweiten (11) Zubehörteils von der Antriebswelle (6) des ersten Elektromotors (2) angetrieben werden, und andererseits die Welle (15) des dritten Zubehörteils (12) von der Antriebswelle (7) des zweiten Elektromotors (3) über jeweils drei Riemen oder Kraftübertragungsketten (18a, 18b, 18c), die außerhalb des Gehäuses (19) des Untersetzungssystems (4) angeordnet sind, angetrieben wird.

8. Kraftfahrzeug (20) nach einem der Ansprüche 1 bis 7, **dadurch gekennzeichnet, dass** das erste (10), zweite (11) und dritte (12) Zubehörteil gleichermaßen eine Lichtmaschine, ein Klimaanlagenkompressor und eine Kreiselpumpe sind.

## Claims

1. Hybrid motor vehicle (20) comprising a power plant, said power plant comprising first (2) and second (3) electric motors, a motor gear system (4) comprising an output shaft (5), the drive shafts (6, 7) of the first (2) and second (3) electric motors being connected mechanically to the output shaft (5) of the motor gear system respectively via two coupling devices (8, 9), and further comprising first (10) and second (11) accessories driven by the first (2) electric motor, and a third accessory (12) driven by the second electric motor (3), **characterized in that** it comprises a front running gear (23), a rear running gear (24), an internal combustion engine (22) in the front of the vehicle for driving the front running gear (23), the electric motors (2, 3) and the motor gear system (4) being in the rear of the vehicle (20) for driving the rear running gear (24).

2. Motor vehicle (20) according to Claim 1, **characterized in that** the first (10) and second (11) accessories are connected in series to each other via a mechanical transmission device (16) which enables different rotating speeds of the two shafts (13, 14) of the first (10) and second accessories (11).

3. Motor vehicle (20) according to Claim 2, **characterized in that** the mechanical transmission device (16) is an epicyclic geartrain.

4. Motor vehicle (20) according to Claim 2 or 3, **characterized in that** the shaft (14) of the second accessory (11) is connected mechanically to the mechanical transmission system (16) via a coupling device (17).

5. Motor vehicle (20) according to any one of the preceding claims, **characterized in that** on the one hand the shaft (13) of the first accessory (10) is driven by the drive shaft (6) of the first electric motor (2) and on the other hand the shaft (15) of the third accessory (12) is driven by the drive shaft (7) of the second electric motor (3), respectively via two transmission belts or chains (18a, 18b) accommodated with the electric motors (2, 3) and the accessories (10, 11, 12) in the crankcase (19) of the motor gear system (4).

6. Motor vehicle (20) according to Claim 1, **characterized in that** the first (10) and second (11) accessories are connected in parallel to the drive shaft (6) of the first electric motor (2).

7. Motor vehicle (20) according to Claim 6, **characterized in that** on the one hand the shafts (13, 14) of the first (10) and second (11) accessories are driven by the drive shaft (6) of the first electric motor (2) and on the other hand the shaft (15) of the third accessory (12) is driven by the drive shaft (7) of the second electric motor (3), respectively via two transmission belts or chains (18a, 18b, 18c) arranged outside the crankcase (19) of the motor gear system (4) .

8. Motor vehicle (20) according to any one of Claims 1 to 7, **characterized in that** the first (10), second (11) and third (12) accessories are optionally an alternator, an air conditioning compressor or a centrifugal pump.
